# EUROPÄISCHE PATENTSCHRIFT

(11) **EP 3 755 609 B1**
(45) Veröffentlichungstag und Bekanntmachung des Hinweises auf die Patenterteilung: **15.09.2021**
(21) Anmeldenummer: 19707712.6
(22) Anmeldetag: 12.02.2019
(51) Int. Cl.: B62D 57/032, B25J 19/00, B25J 9/10, B25J 19/02

(54) **MOBILER ROBOTER SOWIE VERFAHREN ZUM AUSFÜHREN EINER LAUFBEWEGUNG**
MOBILE ROBOT AND METHOD FOR PERFORMING A RUNNING/WALKING MOVEMENT
ROBOT MOBILE AINSI QUE PROCÉDÉ SERVANT À EXÉCUTER UN MOUVEMENT DE MARCHE

(30) Priorität: 21.02.2018 DE 102018103892
(43) Veröffentlichungstag der Anmeldung: 30.12.2020
(73) Patentinhaber: Benubot-Projektkooperation GbR, 99869 Tüttleben (DE)
(72) Erfinder: KARGUTH, Andreas, 99869 Tüttleben (DE)
(74) Vertreter: Engel, Christoph Klaus
(86) Internationale Anmeldenummer: PCT/EP2019/053405
(87) Internationale Veröffentlichungsnummer: WO 2019/162144

(56) Entgegenhaltungen:
- CN-U- 204 110 199
- CN-U- 205 150 021
- US-A1- 2008 290 743
- L Mederreg ET AL: "The RoboCoq Project: Modelling and Design of Bird-like Robot", , 1. Januar 2003 (2003-01-01), XP055590852, Gefunden im Internet: URL:http://citeseerx.ist.psu.edu/viewdoc/d ownload?doi=10.1.1.465.2079&rep=rep1&type= pdf [gefunden am 2019-05-22]
- VINCENT HUGEL ET AL: "Kinematic Modeling of Bird Locomotion from Experimental Data", IEEE TRANSACTIONS ON ROBOTICS, IEEE SERVICE CENTER, PISCATAWAY, NJ, US, Bd. 27, Nr. 2, 1. April 2011 (2011-04-01), Seiten 185-200, XP011352698, ISSN: 1552-3098, DOI: 10.1109/TRO.2011.2107792
- PRATT J ET AL: "Intuitive control of a planar bipedal walking robot", PROCEEDINGS / 1998 IEEE INTERNATIONAL CONFERENCE ON ROBOTICS AND AUTOMATION, MAY 16 - 20, 1998, KATHOLIEKE UNIVERSITEIT LEUVEN, LEUVEN, BELGIUM, IEEE, NEW YORK, NY, USA, Bd. 3, 16. Mai 1998 (1998-05-16), Seiten 2014-2021, XP010281551, DOI: 10.1109/ROBOT.1998.680611 ISBN: 978-0-7803-4300-9

## Beschreibung

Die vorliegende Erfindung betrifft einen mobilen Roboter, mit welchem insbesondere Lauf- und/oder Sprungbewegungen von Vögeln nachgeahmt werden können. Die Erfindung betrifft zudem ein Verfahren zum Ausführen einer Laufbewegung mit einem solchen Roboter.

Aus dem Stand der Technik sind verschiedene technische Lösungen zur pedalen Lokomotion bekannt. Der Laufroboter "ASIMO" des Herstellers Honda, der Laufroboter "ATLAS" des Herstellers Boston Dynamics und der Laufroboter "NAO" des Herstellers Soft Bank Robotics basieren auf aktiven Starrkörpermechanismen.

In dem Artikel von Mederreg, Hügel et al. "The RoboCoq Project: Modelling a Design of Bird-like Robot", 01.01.2003, wird ein Projekt zum Entwurf eines Prototyps eines autonomen Zweibeiners beschrieben, welcher als theoretische Grundlage ein Vogelmodell heranzieht.

Der Artikel von Hugel, Hackert und Abourachid "Kinematic Modeling of Bird Locomotion from Experimental Data" in IEE TRANSACTIONS ON ROBOTICS, Vol. 27, Nummer , 02.04.2011, beschreibt einen Entwurf eines vogelähnlichen Kinematikmodells für einen zweibeinigen Roboter als Alternative zum menschlichen Laufen.

Der Artikel von Jerry und Gill Pratt "Intuitive Control of a Planar Bipedal Walking Robot", in Proceedings of IEEE International Conference of Robotics & Automation, Belgien, Mai 1998, beschreibt einen zweifüßigen Roboter, welcher anhand von einfachen intuitiven Strategien dazu gebracht wird, Hindernisse zu überwinden.

Das Gebrauchsmuster CN 205 150 021 U beschreibt einen energiesparenden Gehbeinmechanismus, welcher die Gehfunktion eines Straußes imitiert. Das Gebrauchsmuster nutzt dabei die Rückpralleigenschaften des Intertarsalgelenks eines Straußes.

Das Gebrauchsmuster CN 204 110 199 U beschreibt eine Bewegungsvorrichtung und einen diese Vorrichtung verwendenden Bio-Roboter. Zur Realisierung der Bewegungsvorrichtung des vierbeinigen Roboters werden neuartige Fahrwerke verwendet.

Das Patent US 2008/0290743 A1 beschreibt ein energieeffizientes Biped-Robotersystem mit einer passiv-dynamischen Fortbewegung. Ein Energierückgewinnungsmechanismus umfasst eine Last und einen mechanischen Energiespeichermechanismus. Der Energierückgewinnungsmechanismus führt die erzeugte elektrische Energie an den Energiespeicher.

In dem Artikel von Collins, Steve et al. "Efficient Bipedal Robots Based on Passive-Dynamic Walkers" in Science, Jahrgang 307, Ausgabe 5712, Seiten 1082-1085, 18.02.2005 wird ein Laufroboter beschrieben, der auf einem passiven Starrkörpermechanismus basiert.

In dem Artikel von Kurowski, S. und von Stryk, O. "A systematic approach to the design of embodiment with application to bio-inspired compliant legged robots" in IEEE/RSJ Intl. Conf. on Intelligent Robots and Systems (IROS), Seiten 3771-3778, IEEE, 28.09 bis 02.10.2015 und in dem Artikel von Christensen, David Johan et al. "A distributed and morphology-independent strategy for adaptive locomotion in self-reconfigurable modular robots" in Robotics and Autonomous Systems, Jahrgang 61, Ausgabe 9, September 2013, Seiten 1021-1035 werden dynamische Laufmaschinen vorgestellt, welche auf Modellen aktiver, nachgiebiger Mechanismen basieren und dem Vorbild des Laufens beim Menschen entsprechend konstruiert sind.

Der Laufroboter "OutRunner" des Herstellers Robotics Unlimited Inc. weist sternförmig angeordnete Beine auf, welche zum Zwecke der Fortbewegung rotieren.

Der Laufroboter "CASSIE" des Herstellers Agility Robotics basiert auf aus der Natur bekannten Bewegungsprinzipien.

In der Habilitationsschrift von Andrada, Emanuel: "Contributions to the biomechanics of bipedal locomotion - methods and models", Technische Universität Ilmenau, Fakultät für Maschinenbau, 2017, werden biomechanische Lösungen zum zweibeinigen Laufen vorgestellt.

In dem Artikel von Andrada, E. et al.: "3D-inverse dynamics of beagles' forelimbs at walk and trot" in Am. J. Vet. Res., Jahrgang 78, Nr. 7, 2017, Seiten 804-817; in dem Artikel von Andrada, E. et al.: "Stability in skipping gaits" in Roy. Soc. Open Sci., Ausgabe 3(11), 2016; in dem Artikel von Kilbourne, B. M. et al.: "Morphology and motion: hindlimb proportions and swing phase kinematics in terrestrially locomoting charadriiform birds" in J Exp. Biol., Ausgabe 10.1242, 2016; in dem Artikel von Rode, C. et al.: "Minimizing the cost of locomotion with inclined trunk predicts crouched leg kinematics of small birds at realistic levels of elastic recoil" in J Exp. Biol., Ausgabe 10.1242, 2016; in dem Artikel von Andrada, E. et al.: "Mixed gaits in small avian terrestrial locomotion" in Sci. Rep., Ausgabe 5, 13636, 2015; in dem Artikel von Blickhan, R. et al.: "Positioning the hip with respect to the COM: Consequences for leg operation" in J Theor Biol., Ausgabe 382:187-97, 2015; in dem Artikel von Andrada, E. et al.: "Trunk orientation causes asymmetries in leg function in small bird terrestrial locomotion" in Proc Roy Soc B., Ausgabe 281(1797), 2014; in dem Artikel von Nyakatura J. A. und Andrada E.: "On vision in birds: coordination of head-bobbing and gait stabilizes vertical head position in quail" in Frontiers in Zoology, Ausgabe 11(1), 27, 2014; in dem Artikel von Andrada, E. et al.: "Adjustments of global and local hindlimb properties during the terrestrial locomotion of the common quail (Coturnix coturnix)" in J Exp Biol, Ausgabe 216, Seiten 3906-3916; in dem Artikel von Andrada, E. et al.: "Grounded running in quails: Simulations indicate benefits of observed fixed aperture angle between legs before touch-down" in J Theor Biol, Ausgabe 335, Seiten 97-107, 2013 und in dem Artikel von Andrada, E. et al.: "Grounded Running: An Overlooked Strategy for Robots" in Autonomous Mobile Systems 2012, Seiten 79-87, Springer Berlin Heidelberg werden Forschungsergebnisse zum Laufen von Vögeln und Hunden vorgestellt und hieraus entsprechende Modelle gebildet. Jedoch werden keine konkreten technischen Lösungen aufgezeigt. Die Laufprinzipien unterscheiden sich in ihrer Stabilität und in ihrem Steuerungsaufwand deutlich von den angeführten Prinzipien des menschlichen Laufens.

In dem Artikel von Vejdani, H. R. et al.: "Bio-inspired swing leg control for spring-mass robots running on ground with unexpected height disturbance" in Bioinspiration & biomimetics, Ausgabe 8(4), 2013; in dem Artikel von Blum, Y. et al.: "Swing-leg trajectory of running guinea fowl suggests tasklevel priority of force regulation rather than disturbance rejection" in PLoS ONE 9, 2014; in dem Artikel von Birn-Jeffery, A. V.: "Don't break a leg: running birds from quail to ostrich prioritise leg safety and economy on uneven terrain" in J. Exp. Biol., Ausgabe 217, Seiten 3786-3796, 2014; in dem Artikel von Hubicki, C. et al.: "ATRIAS: Design and validation of a tether-free 3D-capable spring-mass bipedal robot" in The International Journal of Robotics Research, Ausgabe 35(12), Seiten 1497-1521, 2016; in dem Artikel von Dadashzadeh, B. et al.: "From template to anchor: A novel control strategy for spring-mass running of bipedal robots" in Intelligent Robots and Systems (IROS 2014), 2014 IEEE/RSJ, Seiten 2566-2571 und in dem Artikel von Daniel Renjewski, et al.: "Exciting Engineered Passive Dynamics in a Bipedal Robot" in IEEE Transactions on Robotics, 2015, Jahrgang 31, Ausgabe 5 werden wissenschaftliche Untersuchungen zur Fortbewegung von Robotern vorgestellt.

Die US 6,779,621 B2 zeigt ein Verfahren zum Stabilisieren eines balancierenden Transporters mit zwei auf einer gemeinsamen Achse angeordneten Rädern.

Die US 2016/0347387 A1, die US 2016/0288848 A1 und die US 2013/0013111 A1 zeigen Lösungen für zweibeinige Laufroboter, die jeweils ein Feder-Masse-Schwingsystem verwirklichen.

Die CN 107539385 A zeigt ein Bein eines Roboters, welches einen Rumpfteil, ein oberes Beinsegment, ein unteres Beinsegment und einen Fuß umfasst. Das obere Beinsegment ist gegenüber dem Rumpf schwenkbar. Das untere Beinsegment ist gegenüber dem oberen Beinsegment streckbar.

Die DE 600 20 315 T2 zeigt einen beweglichen Roboter, welcher die Bewegung eines Menschen nachahmt und durch Beine bewegbar ist. Untere Gliedmaßen des Roboters sind über ein Hüftgelenk mit einem Rumpf verbunden.

In dem Artikel von Cotton, S. et al.: "FastRunner: A Fast, Efficient, and Robust Bipedal Robot. Concept and Planar Simulation" in 2012 IEEE International Conference on Robotics and Automation, RiverCentre, Saint Paul, Minnesota, USA, 14. bis 18. Mai 2012, wird ein zweibeiniger Roboter vorgestellt, mit welchem die Bewegung eines Straußenvogels nachgeahmt werden soll.

Die CN 107554641 A und die CN 205150021 U zeigen Roboterbeine, welche den Beinen von Vögeln nachempfunden sind.

In der CN 103625572 A ist ein Roboterbein mit entgegengesetzt beanspruchten Federn beschrieben.

Die Aufgabe der vorliegenden Erfindung besteht ausgehend vom Stand der Technik darin, die aus der Natur bekannten Lauf- und Sprungbewegungen von Tieren, insbesondere von Vögeln, mit technischen Mitteln besser nachahmen zu können.

Die genannte Aufgabe wird gelöst durch einen mobilen Roboter gemäß dem beigefügten Anspruch 1. Die genannte Aufgabe wird weiterhin gelöst durch ein Verfahren gemäß dem beigefügten nebengeordneten Anspruch 14.

Die Erfindung zeigt zunächst eine Beinanordnung auf. Die Beinanordnung ist für einen mobilen Roboter vorgesehen und bildet eine eigenständige Funktionseinheit, mit welcher Vorschubbewegungen, vorzugsweise Lauf- und/oder Sprungbewegungen, durchgeführt werden können. Mit der erfindungsgemäßen Beinanordnung können insbesondere Lauf- und/oder Sprungbewegungen von Vögeln nachgeahmt werden.

Die Beinanordnung umfasst mindestens ein Bein und einen Rumpfteil. Das Bein trägt den Rumpfteil und umfasst ein oberes Beinsegment und ein unteres Beinsegment. Das obere Beinsegment und das untere Beinsegment sind durch ein Mittelgelenk miteinander verbunden, sodass das obere Beinsegment und das untere Beinsegment zueinander verschwenkt werden können, wofür das Mittelgelenk zu strecken oder zu beugen ist.

Das obere Beinsegment und das untere Beinsegment sind durch einen Streckantrieb über das Mittelgelenk zueinander streckbar, sodass die Schwenkbewegung zwischen dem oberen Beinsegment und dem unteren Beinsegment aktuierbar und steuerbar ist. Das obere Beinsegment ist in einem Rumpfgelenk am Rumpfteil gelagert, sodass das obere Beinsegment zumindest in einer Laufrichtung nach vorn und hinten geschwungen werden kann. Das obere Beinsegment ist mit einem Beinschwingungsantrieb gegenüber dem Rumpfteil in die Laufrichtung schwingbar, sodass die Schwingbewegung des Beines gegenüber dem Rumpfteil in die Laufrichtung aktuierbar und steuerbar ist.

Das Rumpfgelenk ist gegenüber dem Rumpfteil mit einem Beineinzugsantrieb verschiebbar. Das Rumpfgelenk ist insbesondere in eine vertikale Richtung gegenüber dem Rumpfteil mit dem Beineinzugsantrieb nach oben und unten verschiebbar. Somit können das Rumpfgelenk und das daran angebrachte Bein in Richtung des Rumpfes eingezogen werden. Ebenso können das Rumpfgelenk und das daran angebrachte Bein vom Rumpf wegverschoben werden.

Das obere Beinsegment ist in Bezug auf das Rumpfgelenk über eine Feder-Dämpfer-Einheit durch eine zwischen dem oberen Beinsegment und dem Rumpfgelenk wirkende Kraft verkürzbar. Das obere Beinsegment ist insbesondere in Längsrichtung des oberen Beinsegmentes verkürzbar. Diese Verkürzung des oberen Beinsegmentes wirkt gegen die Feder-Dämpfer-Einheit, sodass bei einem Verschwinden der zwischen dem oberen Beinsegment und dem Rumpfgelenk wirkenden Kraft die Verkürzung durch die Feder der Feder-Dämpfer-Einheit wieder aufgehoben wird.

Das Bein weist am unteren Beinsegment einen sich in einer Fläche erstreckenden Fuß auf, sodass der Fuß auf einen Boden über mindestens drei Kontaktpunkte stehen kann, die nicht gemeinsam auf einer Geraden liegen. Der Fuß erstreckt sich somit im Stand in einer Fläche parallel zum Boden.

Ein besonderer Vorteil der Beinanordnung besteht darin, dass sie die Realisierung eines vogelähnlichen Laufsystems erlaubt, was durch die Kombination aus dem Beinschwingungsantrieb, dem Beineinzugsantrieb und der Verkürzbarkeit des oberen Beinsegmentes gegenüber dem Rumpfgelenk über die Feder-Dämpfer-Einheit möglich wird. Die Beinanordnung ermöglicht einen großen Stabilitätsbereich bei einem minimalen Steuer- und Regelungsaufwand. Sie erfordert im Vergleich zu Robotern auf der Basis aktuierter Starrkörperlaufsysteme einen geringen Energiebedarf für die Fortbewegung.

Bei bevorzugten Ausführungsformen der Beinanordnung ist das obere Beinsegment mit einem Beindrehungsantrieb um eine Längsachse des oberen Beinsegmentes drehbar. Das obere Beinsegment kann somit in Bezug auf den Rumpfteil und auf das Rumpfgelenk um die Längsachse des oberen Beinsegmentes gedreht werden. Diese Drehung ist durch den Beindrehungsantrieb aktuierbar und steuerbar. Durch diese Drehung werden auch das untere Beinsegment und der Fuß in Bezug auf den Rumpfteil gedreht. Der maximale Drehwinkel beträgt bevorzugt ±90° und weiter bevorzugt ±45°. Der Beindrehungsantrieb umfasst bevorzugt einen Sensor zur Messung der Drehposition des oberen Beinsegmentes. Der Sensor für die Messung der Drehposition ist bevorzugt durch einen Encoder mit einem Nullpunktgeber gebildet. Der Beindrehungsantrieb ist bevorzugt zur Lage- und Orientierungsregelung, d. h. zur Regelung einer Pose ausgebildet.

Bei bevorzugten Ausführungsformen der Beinanordnung ist der Fuß über ein Fußgelenk am unteren Beinsegment angebracht. Bevorzugt ist der Fuß im Fußgelenk um eine in Drehrichtung des Mittengelenkes verlaufend parallele Achse und eine zu dieser um 90° verdrehte Achse in Bezug auf das untere Fußsegment drehbar.

Der Fuß weist bevorzugt mindestens drei zueinander entfernte Bodenkontaktpunkte auf, die eine Ebene aufspannen, welche die Fläche der Erstreckung des Fußes bildet. Der Fuß kann in den drei Bodenkontaktpunkten auf dem Boden stehen, sodass auch die gesamte Beinanordnung und gegebenenfalls weitere angekoppelte Baugruppen in den drei Bodenkontaktpunkten auf dem Boden stehen. Einer der Bodenkontaktpunkte ist bevorzugt bezogen auf die Laufrichtung hinter dem Fußgelenk anordnet. Dabei ist dieser Bodenkontaktpunkt bevorzugt auf einer in der Laufrichtung ausgerichteten und die Beinlängsachse schneidenden Gerade angeordnet. Zwei weitere der Bodenkontaktpunkte sind bevorzugt bezogen auf die Laufrichtung vor dem Fußgelenk angeordnet. Dabei sind diese beiden Bodenkontaktpunkte bevorzugt beiderseits der in der Laufrichtung ausgerichteten und die Beinlängsachse schneidenden Gerade angeordnet. Diese beiden Bodenkontaktpunkte weisen bevorzugt jeweils einen gleichen Abstand zu dieser Geraden auf. Der Fuß weist bevorzugt genau diese drei Bodenkontaktpunkte auf. Die Bodenkontaktpunkte sind bevorzugt kalottenförmig ausgebildet. Die Bodenkontaktpunkte bestehen bevorzugt aus einem elastischen Material.

Im Fuß ist bevorzugt eine Kraftgrößensensoreinheit angeordnet, mit welcher Kraftgrößen wie Kräfte und Momente am Fuß, insbesondere in den Bodenkontaktpunkten messbar sind. Die Kraftgrößensensoreinheit umfasst bevorzugt drei Kraftsensorelemente, die jeweils an einem der drei Bodenkontaktpunkte angeordnet sind. Mit der Kraftgrößensensoreinheit sind insbesondere die von dem Boden auf den Fuß rückwirkenden Kräfte und Momente messbar.

Bei bevorzugten Ausführungsformen der Beinanordnung ist der Fuß gegenüber dem unteren Beinsegment mit einem ersten Fußstellantrieb um eine parallel zur Drehachse des Mittelgelenkes verlaufende Achse drehbar. Diese Achse wird als Fußquerachse bezeichnet. Diese Drehung ist durch den ersten Fußstellantrieb aktuierbar und steuerbar. Diese Drehung führt zu einer Streckung bzw. Beugung des Fußes gegenüber dem unteren Beinsegment um die Fußquerachse in Analogie zur Dorsalextension und Plantarflexion gemäß Terminologia anatomica.

Bei bevorzugten Ausführungsformen der Beinanordnung ist der Fuß gegenüber dem unteren Beinsegment mit einem zweiten Fußstellantrieb um eine Achse drehbar, welche in Längsrichtung des Fußes ausgerichtet ist. Diese Drehachse wird als Fußlängsachse bezeichnet. Diese Drehung ist durch den zweiten Fußstellantrieb aktuierbar und steuerbar. Diese Drehung führt zu einer Einwärts- bzw. Auswärtskippung des Fußes gegenüber dem unteren Beinsegment in Analogie zur Supination und Pronation gemäß Terminologia anatomica.

Bevorzugte Ausführungsformen der Beinanordnung umfassen einen Sensor, mit welchem zumindest ein Winkel zwischen dem Fuß und dem unteren Beinsegment messbar ist. Bei dem mindestens einen Winkel handelt es sich bevorzugt um einen Winkel, welcher die Drehung des Fußes um die Fußquerachse beschreibt, und/oder um einen Winkel, welcher die Drehung des Fußes um die Fußlängsachse beschreibt. Mit dem Sensor ist mindestens eine von drei Komponenten einer mathematischen Beschreibung einer Differenz von räumlichen Winkellagen des jeweiligen Fußes messbar. Bei den Komponenten der mathematischen Beschreibung der Differenz der räumlichen Winkellagen des jeweiligen Fußes handelt es sich um die rotatorischen Komponenten von Posen des jeweiligen Fußes. Mit dem Sensor sind bevorzugt zwei oder weiter bevorzugt drei der drei Komponenten der mathematischen Beschreibung der Differenz der räumlichen Winkellagen des jeweiligen Fußes messbar.

Auf dem Fuß ist bevorzugt ein Inertialsensor angeordnet, mit welchem die Lage und Orientierung, d. h. die Pose des Fußes im Raum messbar ist. Der Inertialsensor ist bevorzugt zur Messung der Lage des Fußes in allen drei Raumrichtungen und zur relativen Orientierung des Fußes um die Achsen aller drei Raumrichtungen in Bezug auf ein an einem Zentralkörper ausgerichtetes Koordinatensystem ausgebildet, dessen Pose durch einen dort befindlichen Inertialsensor bestimmbar ist.

Bei bevorzugten Ausführungsformen der Beinanordnung umfasst der Streckantrieb eine zwischen dem oberen Beinsegment und dem unteren Beinsegment wirkende Rückstellfeder und einen Seilzug. Die Rückstellfeder ist bevorzugt dazu ausgebildet, das obere Beinsegment und das untere Beinsegment zueinander zu beugen. Über den Seilzug kann eine Kraft aufgebracht werden, um das obere Beinsegment und das untere Beinsegment über das Mittelgelenk zu strecken. Der Seilzug umfasst bevorzugt ein Zugseil, welches auf einem Scheibensegment geführt ist. Ein Ende des Zugseiles ist bevorzugt auf dem Scheibensegment befestigt. Das Scheibensegment ist im Mittelgelenk drehfest mit einem der beiden Beinsegmente verbunden; bevorzugt mit dem unteren Beinsegment. Das Scheibensegment ist bevorzugt als ein Kurvenscheibensegment ausgebildet.

Der Streckantrieb umfasst bevorzugt weiterhin einen Seilzugantrieb zum Beaufschlagen des Zugseiles mit einer Zugkraft. Der Seilzugantrieb ist bevorzugt am Rumpfteil angeordnet. Der Seilzugantrieb umfasst bevorzugt einen Elektromotor und ein Zugmittelgetriebe. Der Seilzugantrieb ist bevorzugt positionsregelbar. Das Zugseil ist zwischen dem Rumpfteil und dem Mittelgelenk bevorzugt in einer Zughülle geführt, sodass das Zugseil und die Zughülle einen Bowdenzug ausbilden.

Bei bevorzugten Ausführungsformen der Beinanordnung ist das obere Beinsegment mit einem Beinschwenkungsantrieb um die Längsachse des oberen Beinsegmentes schwenkbar. Das obere Beinsegment ist somit zur Seite nach außen und nach innen schwenkbar. Diese Schwenkbewegung ist durch den Beinschwenkungsantrieb aktuierbar und steuerbar. Der Beinschwenkungsantrieb umfasst bevorzugt einen Elektromotor mit einem Getriebe und ein Messsystem zur Erfassung der Drehposition. Der Beinschwenkungsantrieb ist bevorzugt positionsregelbar. Da das obere Beinsegment mit dem Beinschwenkungsantrieb um die Längsachse des oberen Beinsegmentes schwenkbar ist, ist auch das gesamte Bein um diese Achse zur Seite schwenkbar. Diese Schwenkbewegung kann gegenüber dem Rumpfteil erfolgen. Diese Schwenkbewegung kann alternativ bevorzugt auch gemeinsam mit dem Rumpfteil erfolgen, sodass unmittelbar der Rumpfteil geschwenkt wird, wodurch das am Rumpfteil aufgehängte Bein ebenfalls geschwenkt wird.

Bei bevorzugten Ausführungsformen der Beinanordnung umfasst der Beinschwingungsantrieb ein Riemengetriebe mit einer treibenden Riemenscheibe und mit einer getriebenen Riemenscheibe. Die treibende Riemenscheibe ist mit einem Elektromotor antreibbar. Die getriebene Riemenschreibe ist im Rumpfgelenk drehfest mit dem oberen Beinsegment verbunden. Auf der treibenden Riemenscheibe und der getriebenen Riemenscheibe läuft ein Riemen, der bevorzugt durch einen Zahnriemen gebildet ist. Der maximale Schwingungswinkel zwischen dem oberen Beinsegment und dem Rumpfteil beträgt bevorzugt ±90° und weiter bevorzugt ±45°. Der Beinschwingungsantrieb ist bevorzugt momenten- und positionsregelbar. Der Elektromotor umfasst bevorzugt ein Drehgetriebe und bevorzugt einen Encoder zur Positionserfassung. An der getriebenen Riemenscheibe ist bevorzugt ein Sensor zur Messung des Drehwinkels der getriebenen Riemenscheibe und somit auch des oberen Beinsegmentes angeordnet. Der Sensor ist bevorzugt durch einen Nullpunkt- oder Absolutdrehsensor gebildet.

Bei bevorzugten Ausführungsformen der Beinanordnung umfasst der Beineinzugsantrieb einen das Rumpfgelenk tragenden Hebelarm, der mit einem Hebelgetriebe des Beineinzugsantriebs gegenüber dem Rumpfteil schwenkbar ist. Da der Hebelarm das Rumpfgelenk trägt, trägt er auch das obere Beinsegment. Der Hebelgetriebe umfasst bevorzugt ein Spindelgetriebe und einen vom Spindelantrieb schiebbaren Antriebshebel, sodass der Antriebshebel und der Hebelarm einen Kniehebel bilden. Der Kniehebel ist bevorzugt selbsthemmend ausgebildet. Der Spindelantrieb umfasst bevorzugt einen Nullpunktsensor und bevorzugt einen Elektromotor mit einem Encoder zur Positionsregelung.

Bei bevorzugten Ausführungsformen der Beinanordnung ist am oberen Beinsegment ein Wegmesssystem angeordnet, mit welchem die über die Feder-Dämpfer-Einheit wirkende Verkürzung des oberen Beinsegmentes gegenüber dem Rumpfgelenk messbar ist.

Um das obere Beinsegment verkürzbar auszuführen, umfasst es bevorzugt einen Führungsteil und einen Verschiebungsteil. Der Verschiebungsteil ist in dem Führungsteil linear geführt. Diese lineare Führung ist in der Beinlängsrichtung ausgerichtet. Der Führungsteil ist bevorzugt im Rumpfgelenk gelagert. Der Führungsteil sitzt bevorzugt auf der getriebenen Riemenscheibe. Die Feder-Dämpfer-Einheit ist bevorzugt zwischen den Führungsteil und den Verschiebungsteil eingespannt.

In der Feder-Dämpfer-Einheit wirken mindestens eine Feder und mindestens ein Dämpfer parallel. Die Feder-Dämpfer-Einheit umfasst bevorzugt mindestens einen Federdämpfer. Bei dem Federdämpfer handelt es sich um eine integrale Einheit der Feder und des Dämpfers, wobei die Feder und der Dämpfer eine gemeinsame Längsachse besitzen. Die Feder-Dämpfer-Einheit umfasst bevorzugt mindestens zwei der Federdämpfer. Die mindestens zwei Federdämpfer sind bevorzugt parallel zueinander angeordnet.

Die Feder-Dämpfer-Einheit ist bevorzugt in der Beinanordnung austauschbar ausgebildet, sodass die Feder-Dämpfer-Einheit gegen eine Feder-Dämpfer-Einheit mit einer anderen Federsteifigkeit und/oder anderen Dämpfung ausgetauscht werden kann.

Bei weiteren bevorzugten Ausführungsformen umfasst die Feder-Dämpfer-Einheit den Federdämpfer sowie eine weitere Feder, welche mechanisch in Reihe zu dem Federdämpfer geschaltet ist.

Bei bevorzugten Ausführungsformen der Beinanordnung ist das Fußgelenk durch ein elastisches Biegegelenk gebildet. Das Biegegelenk kann zumindest in eine Richtung oder bevorzugt in zwei Richtungen ausgelenkt werden, sodass der Fuß gegenüber dem unteren Beinsegment schwenkbar ist.

Der erste Fußstellantrieb umfasst bevorzugt eine Rückstellfeder, welche auch durch das elastische Biegegelenk selbst gebildet sein kann oder das elastische Biegegelenk ergänzt. Die Rückstellfeder ist bevorzugt durch eine Schraubenfeder, durch ein elastisches Polymersegment oder durch einen Koppelmechanismus mit Federwirkung gebildet. Die Rückstellfeder im Fußgelenk ist bevorzugt dazu ausgebildet, das Fußgelenk zu strecken, d. h. den Fuß um die Fußquersachse in einer Drehrichtung gegenüber dem unteren Beinsegment zu schwenken. Der erste Fußstellantrieb umfasst bevorzugt weiterhin einen ersten Fußstellseilzug, wobei ein Zugseil des ersten Fußstellseilzuges über einen ersten Hebel am Fuß befestigt ist. Über den ersten Fußstellseilzug kann eine Kraft aufgebracht werden, um Fußgelenk zu beugen, d. h. den Fuß um die Fußquersachse in einer Drehrichtung gegenüber dem unteren Beinsegment zu schwenken. Der erste Fußstellantrieb umfasst bevorzugt weiterhin einen ersten Fußstellseilzugantrieb zum Beaufschlagen des Zugseiles des ersten Fußstellantriebes mit einer Zugkraft. Der erste Fußstellseilzugantrieb ist bevorzugt am Rumpfteil angeordnet. Der erste Fußstellseilzugantrieb umfasst bevorzugt einen Elektromotor und ein Zugmittelgetriebe. Der erste Fußstellseilzugantrieb umfasst bevorzugt einen Encoder zur Positionsregelung. Der erste Fußstellseilzugantrieb ist bevorzugt positionsregelbar. Das Zugseil des ersten Fußstellantriebes ist zwischen dem Rumpfteil und dem Fußgelenk bevorzugt in einer Zughülle geführt, sodass das Zugseil und die Zughülle einen Bowdenzug ausbilden. Der erste Fußstellantrieb ist bevorzugt selbsthemmend ausgebildet.

Der zweite Fußstellantrieb umfasst bevorzugt eine Rückstellfeder, welche auch durch das elastische Biegegelenk selbst gebildet sein kann oder das elastische Biegegelenk ergänzt. Die Rückstellfeder ist bevorzugt durch eine Schraubenfeder, durch ein elastisches Polymersegment oder durch einen Koppelmechanismus mit Federwirkung gebildet. Die Rückstellfeder ist bevorzugt dazu ausgebildet, den Fuß gegenüber dem unteren Beinsegment auswärts zu kippen, d. h. in Analogie gemäß Terminologia anatomica den Fuß zu pronieren. Der zweite Fußstellantrieb umfasst bevorzugt weiterhin einen zweiten Fußstellseilzug, wobei ein Zugseil des zweiten Fußstellseilzuges über einen zweiten Hebel am Fuß befestigt ist. Über den zweiten Fußstellseilzug kann eine Kraft aufgebracht werden, um den Fuß gegenüber dem unteren Beinsegment einwärts zu kippen, d. h. in Analogie gemäß Terminologia anatomica den Fuß zu supinieren Der zweite Fußstellantrieb umfasst bevorzugt weiterhin einen zweiten Fußstellseilzugantrieb zum Beaufschlagen des Zugseiles des zweiten Fußstellantriebes mit einer Zugkraft. Der zweite Fußstellseilzugantrieb ist bevorzugt am Rumpfteil angeordnet. Der zweite Fußstellseilzugantrieb umfasst bevorzugt einen Elektromotor und ein Zugmittelgetriebe. Der zweite Fußstellseilzugantrieb umfasst bevorzugt einen Encoder zur Positionsregelung. Der zweite Fußstellseilzugantrieb ist bevorzugt positionsregelbar. Das Zugseil des zweiten Fußstellantriebes ist zwischen dem Rumpfteil und dem Fußgelenk bevorzugt in einer Zughülle geführt ist, sodass das Zugseil und die Zughülle einen Bowdenzug ausbilden. Der zweite Fußstellantrieb ist bevorzugt selbsthemmend ausgebildet.

Bei weiteren bevorzugten Ausführungsformen der Beinanordnung sind das obere Beinsegment und/oder das untere Beinsegment jeweils in Untersegmente geteilt. Die Untersegmente sind jeweils durch ein Zwischengelenk miteinander verbunden und durch einen Zwischenantrieb zueinander stellbar. Das Zwischengelenk und der Zwischenantrieb weisen bevorzugt die gleichen Merkmale wie das Mittelgelenk und der Streckantrieb sowie deren bevorzugte Ausführungen auf.

Der Streckantrieb, der Beinschwingungsantrieb, der Beineinzugantrieb und ggf. der Beindrehungsantrieb, die Fußstellantriebe und/oder der Beinschwenkungsantrieb umfassen bevorzugt auch pneumatische und/oder hydraulische Elemente zur Kraft- und/oder Momentenerzeugung und/oder zur Bewegungs- und Kraft- bzw. Momentenübertragung.

Bei weiteren bevorzugten Ausführungsformen der Beinanordnung ist am Rumpfteil ein Inertialsensor zur Lagebestimmung der Beinpose angeordnet.

Die Beinanordnung umfasst bevorzugt einen Akkumulator zur Versorgung der Aktoren mit elektrischer Energie.

Die Beinanordnung umfasst bevorzugt eine elektronische Steuereinheit zum Steuern oder Regeln des Streckantriebs, des Beinschwingungsantriebs und des Beineinzugsantriebs. Der Akkumulator ist bevorzugt auch mit der elektronischen Steuereinheit verbunden, um diese zu speisen. Die elektronische Steuereinheit ist bevorzugt mit den Inertialsensoren, den Kraftgrößensensoreinheiten, dem Wegmesssystem und/oder den weiteren Sensoren verbunden, um die Antriebe regeln zu können.

Der erfindungsgemäße mobile Roboter ist geeignet, Lauf- und/oder Sprungbewegungen zu vollführen. Der erfindungsgemäße mobile Roboter ist insbesondere geeignet, Lauf- und/oder Sprungbewegungen von Vögeln nachzuahmen. Der mobile Roboter umfasst mindestens zwei der beschriebenen Beinanordnungen. Die Beine der Beinanordnungen tragen gemeinsam einen Zentralkörper des mobilen Roboters.

Bevorzugte Ausführungsformen des mobilen Roboters umfassen bevorzugte Ausführungsformen der beschriebenen Beinanordnung. Im Übrigen weist der mobile Roboter bevorzugt auch Merkmale auf, die im Zusammenhang mit der Beinanordnung beschrieben sind.

Der mobile Roboter stellt bevorzugt ein beinbasiertes Bewegungssystem mit selbststabilisierenden und energiesparenden Eigenschaften dar. Der mobile Roboter kann auch mehr als zwei der Beinanordnungen umfassen. Grundsätzlich weist der erfindungsgemäße mobile Roboter einen hohen Grad an Skalierbarkeit auf, sodass unterschiedliche Größendimensionen und Traglasteigenschaften realisiert werden können.

Der erfindungsgemäße mobile Roboter kann unterschiedliche Funktionen realisieren. Zunächst kann der mobile Roboter sich vorwärts und rückwärts bewegen. Im Bewegungszustand können Änderungen der Bewegungsrichtung realisiert werden. Der mobile Roboter kann eine statisch stabile Position einnehmen und wieder in den Bewegungszustand übergehen.

Die Bewegungen des mobilen Roboters können stoß- und ruckfrei ausgeführt werden. Durch die Ankopplung weiterer Kommunikations-, Steuerungs- und Sensoreinheiten ist der mobile Roboter in der Lage, ferngesteuerte, teilautonome oder autonome Bewegungen auszuführen. Der mobile Roboter ist fähig, eine ausgleichende Reaktion auf mechanische Störungen, welche beispielsweise vom Boden und von der Seite herrühren, zu zeigen. Der mobile Roboter erfordert nur einen geringen Energiebedarf. Der mit zwei Beinanordnungen ausgestattete mobile Roboter zeigt im Betrieb eine Ähnlichkeit zum Erscheinungsbild des Gehens und Laufens bei Vögeln. Wird der mobile Roboter mit vier Beinanordnungen ausgestattet, zeigt er im Betrieb eine Ähnlichkeit zum Erscheinungsbild des Gehens und Laufens bei vierbeinigen Säugetieren.

Der erfindungsgemäße mobile Roboter stellt eine technische Umsetzung eines biomechanischen Grundprinzips für das zweibeinige Laufen nach dem Vorbild von Vögeln dar. Das Grundprinzip erlaubt eine stabile Führung eines Körpers bei geringem Energieverbrauch, einer hohen Stabilität, einem geringen Eigengewicht und einem geringen Kontrollaufwand. Die Erfindung ermöglicht eine Reduktion der Anzahl der Gelenkantriebe auf ein Minimum.

Zwischen den Rumpfteilen der Beinanordnung ist bevorzugt ein Zentralkörper angeordnet.

Der mobile Roboter umfasst bevorzugt genau zwei der beschriebenen Beinanordnungen, wodurch insbesondere die Bewegung von Vögeln nachgeahmt werden kann. Alternativ bevorzugt umfasst der mobile Roboter vier oder mehr der beschriebenen Beinanordnungen.

Bei bevorzugten Ausführungsformen des erfindungsgemäßen mobilen Roboters ist im Zentralkörper eine bewegliche Kompensatormasse angeordnet, die mit einem ersten Kompensatormassenstellantrieb in die Längsrichtung des Zentralkörpers verschiebbar ist und die mit einem zweiten Kompensatormassenstellantrieb in die Querrichtung des Zentralkörpers verschiebbar ist. Durch diese Stellantriebe ist die Kompensatormasse gegenüber dem Zentralkörper in zwei Richtungen stellbar. Die beiden Kompensatormassenstellantriebe sind bevorzugt jeweils positionsregelbar. Die beiden Massenstellantriebe umfassen bevorzugt jeweils einen Elektromotor, ein Encoder und einen Nullpunktsensor. Die elektronische Steuereinheit ist bevorzugt mit den Kompensatormassenstellantrieben verbunden, um diese steuern zu können.

Bei bevorzugten Ausführungsformen des erfindungsgemäßen mobilen Roboters sind die Rumpfteile der Beinanordnungen jeweils mit den Beinschwenkungsantrieben um die Längsachse des Zentralkörpers schwenkbar. Durch diese Schwenkbewegung des jeweiligen Rumpfteiles wird auch das am Rumpfteil angebrachte Bein geschwenkt. Die Rumpfteile sind bevorzugt um eine parallel zur Längsachse des Zentralkörpers liegenden Achse am Zentralkörper schwenkbar.

Der erfindungsgemäße mobile Roboter umfasst bevorzugt weiterhin mindestens einen Roboterarm zum Transport, zur Handhabung und/oder zur Manipulation von Objekten. Somit kann der mobile Roboter zum Ausführen von Service- und Inspektionstätigkeiten eingesetzt werden. Der mobile Roboter umfasst bevorzugt weiterhin Sensoren zur Umwelterkennung, sodass er auch für Erkundungen eingesetzt werden kann. Der mobile Roboter umfasst bevorzugt weiterhin ein Kommunikationssystem zur Kommunikation mit anderen Maschinen und/oder mit Menschen. Das Kommunikationssystem erlaubt die Steuerung des mobilen Roboters aus der Ferne und/oder die Übertragung von Sensordaten zu einer entfernten Maschine und/oder zu einem entfernten Menschen. Das Kommunikationssystem ist bevorzugt zur drahtlosen Datenübertragung und/oder zur visuellen, akustischen und/oder körpersprachlichen Kommunikation ausgebildet.

Der erfindungsgemäße mobile Roboter umfasst bevorzugt eine Hülle, welche den Zentralkörper mit den Rumpfteilen, die Beine und ggf. den mindestens einen Roboterarm sowie weitere Roboterkörperteile umschließt. Die Hülle ist bevorzugt elastisch ausgebildet, um die Bewegungen des Laufroboters nicht zu behindern. Die Hülle weist bevorzugt Designelemente auf, die eine Interaktion mit Menschen unterstützen. Die Hülle bildet bevorzugt eine Figur, einen Charakter und/oder eine Gestalt nach, um eine Interaktion mit Menschen zu unterstützen.

Der erfindungsgemäße mobile Roboter ist bevorzugt weiterhin zur Bewegung in gasförmigen oder flüssigen Medien ausgebildet, wofür einen Auftrieb erzeugende Komponenten hinzugefügt werden. Hierzu weist der mobile Roboter bevorzugt weiterhin spezielle Auftriebskörper auf, die einen Auftrieb in Bezug auf das Umgebungsmedium erzeugen. Weitere Mittel zur Erzeugung von Auftriebskräften und Kräften zur Erzeugung einer räumlichen Bewegung kann in Form von einem System von Propellern oder Düsen ausgebildet sein.

Das erfindungsgemäße Verfahren dient zum Ausführen einer Laufbewegung mit der beschriebenen Beinanordnung bzw. mit dem erfindungsgemäßen mobilen Roboter. Bei diesem Verfahren werden der Streckantrieb, der Beinschwingungsantrieb und der Beineinzugsantrieb der jeweiligen Beinanordnung so angesteuert, dass eine von einem Boden auf die Beinanordnung rückwirkende Kraft grundsätzlich in Richtung eines mit dem jeweiligen Rumpfteil ruhenden Punktes wirkt. Dieser mit dem Rumpfteil ruhende Punkt wird auch als Virtual-Pivoting-Punkt bezeichnet. Die vom Boden auf die Beinanordnung rückwirkenden Kräfte weisen jeweils eine Wirklinie auf, die erfindungsgemäß stets den Virtual-Pivoting-Punkt durchstoßen. Unter Berücksichtigung der kinematischen Größen, wie Massen, Trägheiten, Abmessungen, Federsteifigkeiten, Dämpfungen sind durch den Streckantrieb, den Beinschwingungsantrieb und den Beineinzugsantrieb solche Stellmomente zu erzeugen, dass die Wirklinien der vom Boden auf die Beinanordnung rückwirkenden Kräfte jeweils stets den Virtual-Pivoting-Punkt durchstoßen.

Bevorzugt werden der Streckantrieb, der Beinschwingungsantrieb, der Beineinzugsantrieb sowie weiterhin der Beindrehungsantrieb, die Fußstellantriebe und/oder der Beinschwenkungsantrieb der jeweiligen Beinanordnung so angesteuert, dass die vom Boden auf die Beinanordnung rückwirkenden Kräfte grundsätzlich in Richtung des mit dem jeweiligen Rumpfteil ruhenden Punktes wirken. Unter Berücksichtigung der kinematischen Größen, wie Massen, Trägheiten, Abmessungen, Federsteifigkeiten, Dämpfungen sind durch den Streckantrieb, den Beinschwingungsantrieb und den Beineinzugsantrieb sowie durch den Beindrehungsantrieb, die Fußstellantriebe und/oder den Beinschwenkungsantrieb der jeweiligen Beinanordnung solche Stellmomente zu erzeugen, dass die Wirklinien der vom Boden auf die Beinanordnung rückwirkenden Kräfte jeweils stets den Virtual-Pivoting-Punkt durchstoßen.

Bevorzugt ist das erfindungsgemäße Verfahren zum Ausführen einer Laufbewegung mit dem erfindungsgemäßen mobilen Roboter ausgebildet. Die beiden Beine werden bevorzugt abwechselnd belastet, wobei in einer Schwungphase des jeweils nicht belasteten Beines der Beineinzugsantrieb des jeweils nicht belasteten Beines so angesteuert wird, dass dieses Bein in Richtung des jeweiligen Rumpfteiles eingezogen wird. Zudem wird in der Schwungphase des jeweils nicht belasteten Beines der Streckantrieb des jeweils nicht belasteten Beines so angesteuert, dass das Mittelgelenk dieses Beines eingeknickt wird.

Weitere Vorteile, Einzelheiten und Weiterbildungen der Erfindung ergeben sich aus der nachfolgenden Beschreibung bevorzugter Ausführungsformen der Erfindung, unter Bezugnahme auf die Zeichnung. Es zeigen:
- Fig. 1:: eine bevorzugte Ausführungsform einer Beinanordnung eines erfindungsgemäßen Roboters in einer perspektivischen Darstellung;
- Fig. 2:: die in Fig. 1 gezeigte Beinanordnung in einer seitlichen Ansicht;
- Fig. 3:: ein Fuß der in Fig. 1 gezeigten Beinanordnung;
- Fig. 4:: eine bevorzugte Ausführungsform eines erfindungsgemäßen mobilen Roboters;
- Fig. 5:: der in Fig. 4 gezeigte mobile Roboter in einer weiteren Stellung;
- Fig. 6:: einen Zentralkörper mit einer Kompensationsmasse und Kompensationsmassenstellantrieben des in Fig. 4 gezeigten mobilen Roboters; und
- Fig. 7:: ein erfindungsgemäß zu realisierendes mechanisches Ersatzmodell.

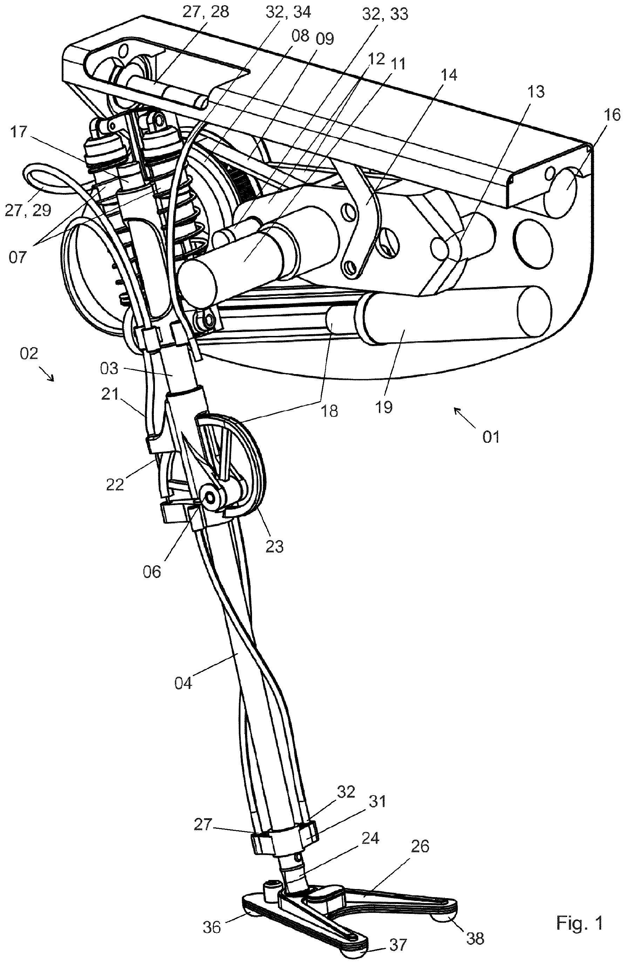

Fig. 1 zeigt eine bevorzugte Ausführungsform einer Beinanordnung eines erfindungsgemäßen mobilen Roboters in einer perspektivischen Darstellung. Die Beinanordnung umfasst ein Rumpfteil 01 und ein beweglich daran befestigtes Bein 02. Das Bein 02 umfasst ein oberes Beinsegment 03 und ein unteres Beinsegment 04, welche über ein Mittelgelenk 06 zueinander beug- und streckbar miteinander verbunden sind. Das obere Beinsegment 03 ist an zwei Federdämpfern 07 aufgehängt, die wiederum an einer angetriebenen Riemenscheibe 08 befestigt sind. Da die angetriebene Riemenscheibe 08 in einem rotativen Lager (nicht gezeigt) im Rumpfteil 01 gelagert ist, kann das Bein 02 durch eine Drehung der angetriebenen Riemenscheibe 08 nach vorn und hinten geschwungen werden, sodass das rotative Lager (nicht gezeigt) ein Rumpfgelenk bildet. Das obere Beinsegment kann gegen die Feder- und Dämpfungskraft der Federdämpfer 07 gegenüber dem durch das rotative Lager (nicht gezeigt) gebildeten Rumpfgelenk verkürzt werden. Die Federkraft der Federdämpfer 07 wirkt dieser Verkürzung entgegen, sodass nach einem Verschwinden äußerer Kräfte das obere Beinsegment 03 seine vollständige Länge in Bezug auf das durch das rotative Lager (nicht gezeigt) gebildete Rumpfgelenk wiedererlangt, indem die Federdämpfer 07 ausfedern.

Die angetriebene Riemenscheibe 08 bildet mit einen Riemen 09 und einer treibenden Riemenscheibe (nicht gezeigt), welche durch einen Elektromotor 11 antreibbar ist, ein Riemengetriebe aus. Der Elektromotor 11 und das durch die angetriebene Riemenscheibe 08, den Riemen 09 und die treibende Riemenscheibe (nicht gezeigt) gebildete Riemengetriebe bilden gemeinsam einen Beinschwingungsantrieb, mit welchem das Bein 02 in eine Laufrichtung nach vorn und hinten geschwungen werden kann.

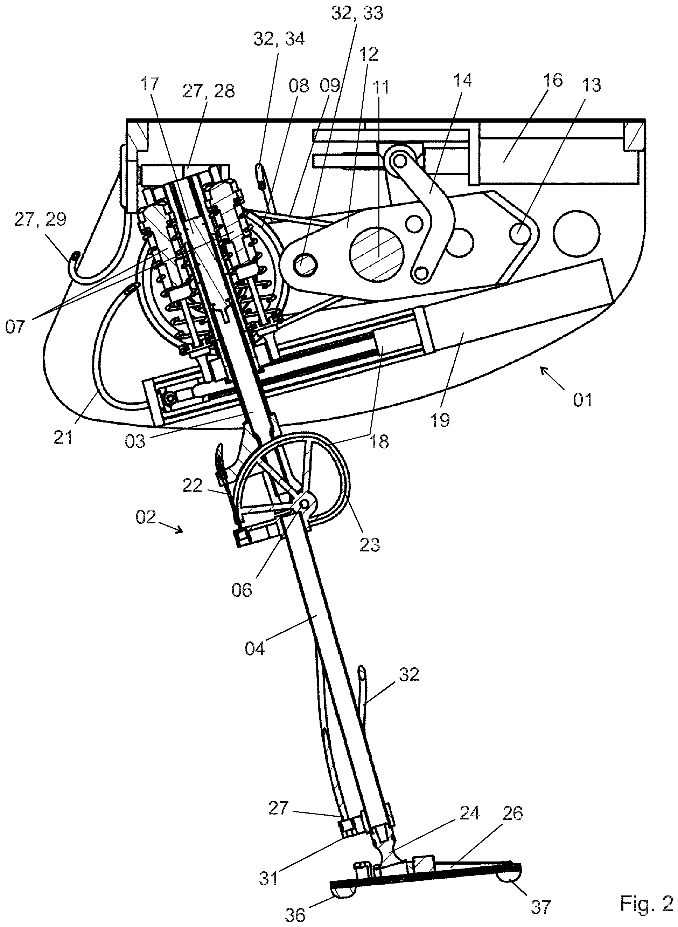

Der Elektromotor 11 und das durch die angetriebene Riemenscheibe 08, den Riemen 09 und die treibende Riemenscheibe (nicht gezeigt) gebildete Riemengetriebe sind auf einem Hebelarm 12 angeordnet, welcher in einer Hebelarmlagerung 13 im Rumpfteil 01 drehbar gelagert ist, sodass er nach oben und unten geschwenkt werden kann. Durch diese Schwenkbewegung wird auch das durch das rotative Lager (nicht gezeigt) gebildete Rumpfgelenk und somit auch das Bein 02 gegenüber dem Rumpfteil 01 nach oben bzw. unten verschoben, sodass ein Einzug des Beines 02 gegenüber dem Rumpfteil 01 erfolgt. An den Hebelarm 12 greift ein Antriebshebel 14 an, der durch einen Spindelantrieb 16 (vollständig gezeigt in Fig. 2) getrieben wird.

Das obere Beinsegment 03 ist um seine Längsachse drehbar. Ein elektrischer Beindrehungsantrieb 17 ermöglicht eine Drehung des oberen Beinsegmentes 03 um seine Längsachse in Bezug auf den Rumpfteil 01.

Das Mittelgelenk 06 ist mithilfe eines Streckantriebes 18 streck- und beugbar. Der Streckantrieb 18 umfasst einen elektrischen Seilzugantrieb 19, welcher am Rumpfteil 01 befestigt ist und einen Bowdenzug 21 mit einer Zugkraft beaufschlagen kann. Der Bowdenzug 21 verläuft zum Mittelgelenk 06 und umfasst ein Zugseil 22, welches auf einem Kurvenscheibensegment 23 geführt ist. Das Kurvenscheibensegment 23 wandelt die Zugkraft des Zugseiles 22 in ein Drehmoment, welches auf das untere Beinsegment 04 wirkt, da das Kurvenscheibensegment 23 im Mittelgelenk 06 drehfest mit dem unteren Beinsegment 04 verbunden ist.

Das untere Beinsegment 04 mündet an seinem unteren Ende in ein elastisches Fußgelenk 24, in welchem ein Fuß 26 gelagert ist. Das Fußgelenk 24 erlaubt eine Drehung des Fußes 26 um eine Fußlängsachse. Das Fußgelenk 24 erlaubt zudem eine Drehung des Fußes 26 um eine Fußquerachse. Die Drehung des Fußes 26 in der Fußquersachse, ist mit einem ersten Fußstellantrieb 27 aktuierbar. Der erste Fußstellantrieb 27 umfasst einen ersten Fußstellseilzugantrieb 28 zum Beaufschlagen eines ersten Bowdenzuges 29 mit einer Zugkraft. Der erste Bowdenzug 29 mündet in eine Bowdenzugaufhängung 31 am Fußgelenk 24. Die Zugkraft des ersten Bowdenzuges 29 wirkt über die Bowdenzugaufhängung 31 als Drehmoment auf den Fuß 26, um diesen um die Fußquersachse zu drehen.

Die Drehung des Fußes 26 in der Fußlängsachse ist mit einem zweiten Fußstellantrieb 32 aktuierbar. Der zweite Fußstellantrieb 32 umfasst einen zweiten Fußstellseilzugantrieb 33 zum Beaufschlagen eines zweiten Bowdenzuges 34 mit einer Zugkraft. Auch der zweite Bowdenzug 34 mündet in die Bowdenzugaufhängung 31 am Fußgelenk 24. Die Zugkraft des zweiten Bowdenzuges 34 wirkt über die Bowdenzugaufhängung 31 als Drehmoment auf den Fuß 26, um diesen um die Fußlängsachse zu drehen.

Der Fuß 26 weist drei Bodenkontaktpunkte 36, 37, 38 auf, welche über eine Fläche verteilt sind. Der erste Bodenkontaktpunkt 36 befindet sich bezogen auf die Laufrichtung hinter dem Fußgelenk 24. Der zweite Bodenkontaktpunkt 37 und der dritte Bodenkontaktpunkt 38 befinden sich bezogen auf die Laufrichtung vor dem Fußgelenk 24 und weisen in einer Richtung senkrecht zur Laufrichtung einen Abstand zueinander auf.

Fig. 2 zeigt die in Fig. 1 gezeigte Beinanordnung in einer seitlichen Ansicht. In dieser Darstellung ist insbesondere auch der Spindelantrieb 16 dargestellt.

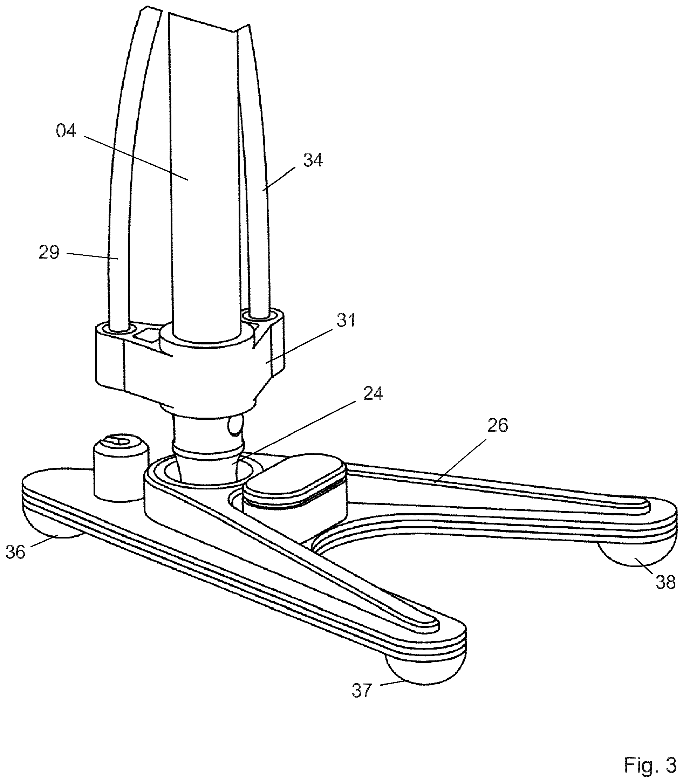

Fig. 3 zeigt den in Fig. 1 gezeigten Fuß 26 in einer Detaildarstellung.

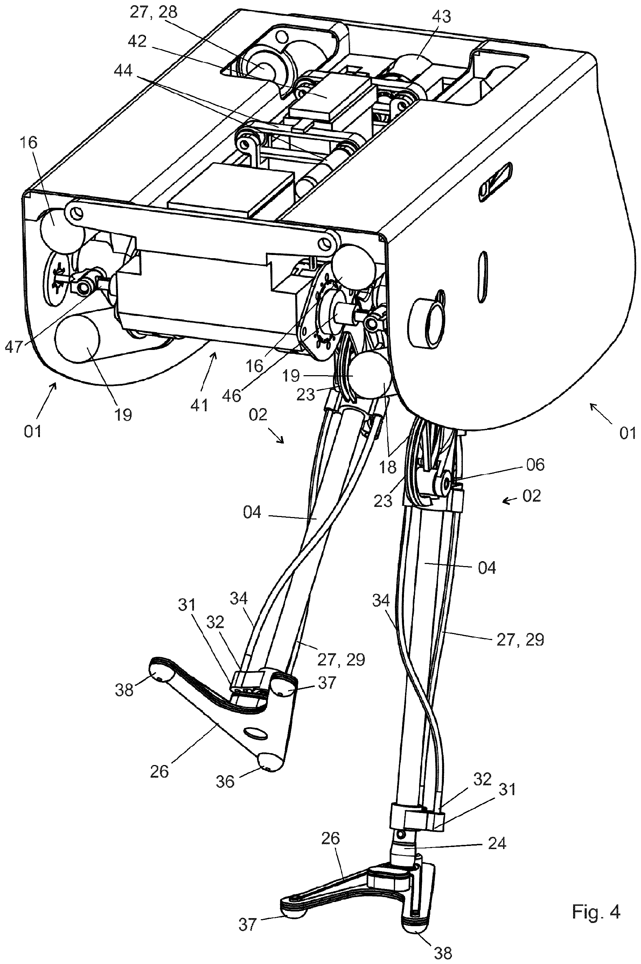

Fig. 4 zeigt eine bevorzugte Ausführungsform eines erfindungsgemäßen mobilen Roboters. Der mobile Roboter umfasst zwei der in Fig. 1 gezeigten Beinanordnungen, welche spiegelsymmetrisch zueinander ausgebildet sind. Die beiden Rumpfteile 01 der beiden Beinanordnungen bilden gemeinsam mit einem Zentralkörper 41 einen Grundkörper des mobilen Roboters, wobei auf dem Grundkörper auch Funktionselemente, wie beispielsweise Roboterarme (nicht gezeigt) angeordnet sein können.

Der Zentralkörper 41 umfasst eine Kompensatormasse 42. Die Kompensatormasse 42 kann mit einem ersten Kompensatormassenstellantrieb 43 in die Längsrichtung des Zentralkörpers verschoben werden. Der erste Kompensatormassenstellantrieb 43 ist als ein elektrischer Spindelantrieb ausgeführt. Die Kompensatormasse 42 kann mit einem zweiten Kompensatormassenstellantrieb 44 in Querrichtung des Zentralkörpers verschoben werden. Der zweite Kompensatormassenstellantrieb 44 ist als ein elektrischer Riemenantrieb ausgeführt.

Der Zentralkörper 41 umfasst weiterhin einen linken Beinschwenkungsantrieb 46, mit welchem der Rumpfteil 01 der linken Beinanordnung zur Seite geschwenkt werden kann, d. h. um eine in der Laufrichtung liegende Achse gedreht werden kann. Der Zentralkörper 41 umfasst weiterhin einen rechten Beinschwenkungsantrieb 47, mit welchem der Rumpfteil 01 der rechten Beinanordnung zur Seite geschwenkt werden kann, d. h. um eine in der Laufrichtung liegende Achse gedreht werden kann.

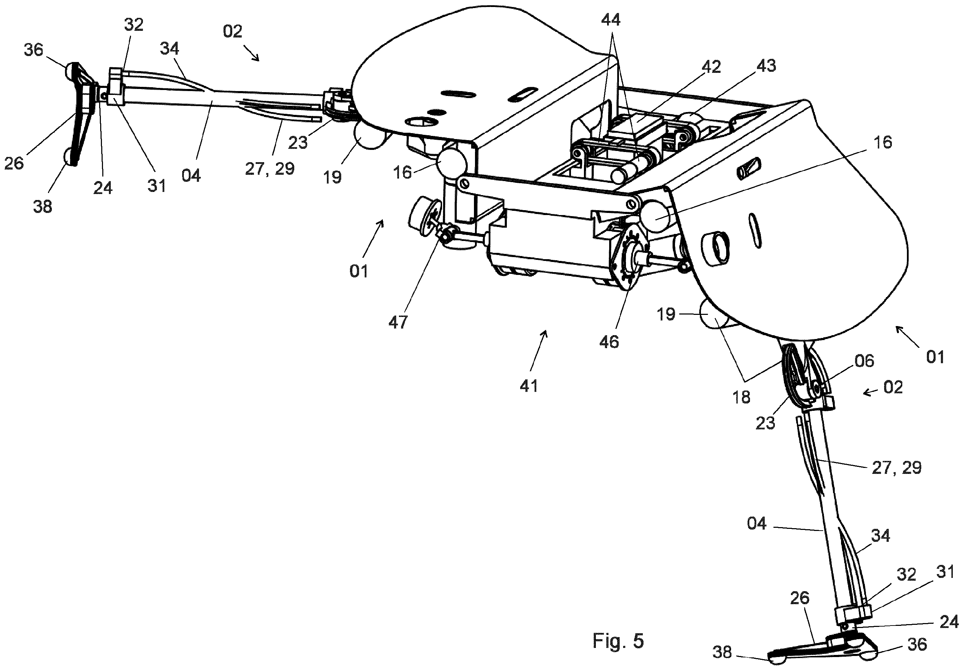

Fig. 5 zeigt den in Fig. 4 gezeigten Laufroboter in einer weiteren Stellung. In dieser Stellung ist der Rumpfteil 01 der rechten Beinanordnung zur Seite geschwenkt, was dadurch erzielt werden kann, dass der rechte Beinschwenkungsantrieb 46 manuell ausgekoppelt wird.

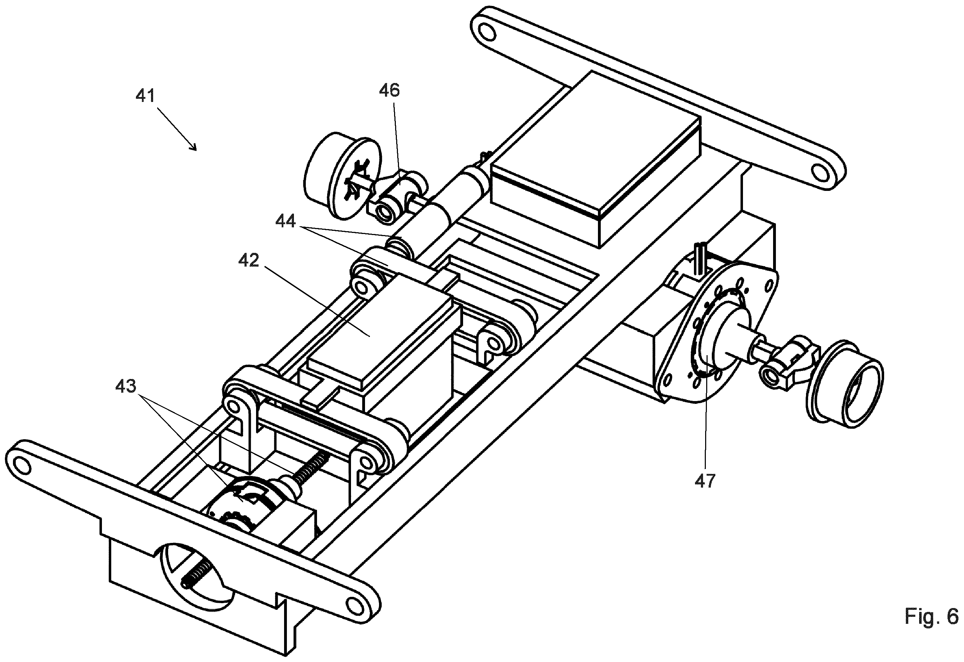

Fig. 6 zeigt den in Fig. 4 gezeigten Zentralkörper 41 mit der Kompensatormasse 42 und den beiden Kompensatormassenstellantrieben 43, 44 im Detail. In dieser Darstellung sind auch die beiden Beinschwenkungsantriebe 46, 47 dargestellt.

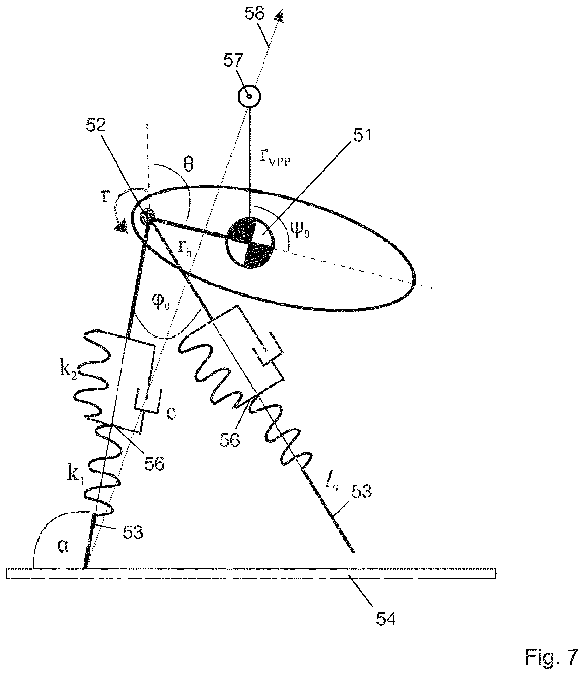

Fig. 7 zeigt ein mechanisches Ersatzmodell eines laufenden Vogels. Dieses mechanische Ersatzmodell wird erfindungsgemäß mit dem in Fig. 4 gezeigten mobilen Roboter nachgeahmt.

Ein Schwerpunkt 51 einer räumlichen ausgedehnten Masse des Körpers des Vogels entspricht einem Schwerpunkt der räumlich ausgedehnten Masse des die Rumpfteile 01, die Beine 02, die Füße 26 und den Zentralkörper 41 umfassenden Gesamtkörper des in Fig. 4 gezeigten mobilen Roboters. In einem Rumpfgelenk 52 schwingen zwei Beine 53, welche eine Länge l₀ besitzen und zu einem Boden 54 einen Winkel α aufweisen. Das Rumpfgelenk 52 weist zum Schwerpunkt 51 der Masse einen Abstand rₕ auf. Dieser Abstand rₕ liegt in einer Geraden, welche zur der Vertikalen einen Winkel Θ aufweist. Zwischen den Beinen 53 wird ein Winkel ϕ₀ aufgespannt. In dem Rumpfgelenk 52 wirkt auf die Beine 53 ein Hüftmoment τ, welches bei der in Fig. 1 gezeigten Beinanordnung durch den Elektromotor 11, die angetriebene Riemenscheibe 08, den Riemen 09 und die treibende Riemenscheibe umfassenden Beinschwingungsantrieb erzeugt wird. Die Beine 53 umfassen im mechanischen Ersatzmodell jeweils ein Feder-Dämpfer-System 56, welches den in Fig. 1 gezeigten Federdämpfern 07 entspricht. Das Feder-Dämpfer-System 56 beschreibt eine serielle Beinsteifigkeit k₁, eine parallele Beinsteifigkeit k₂ und eine Beindämpfung c.

Ein Virtual-Pivoting-Punkt 57 befindet sich in einem Abstand r_{VPP} über dem Schwerpunkt 51 der Masse. Erfindungsgemäß werden entsprechend dem Vorbild der Natur die Bewegungen des in

Fig. 4 gezeigten mobilen Roboters so gesteuert, dass während des Laufens die vom Boden 54 auf die Beine 53 (01 in Fig. 4) wirkenden Kräfte 58 stets auf den Virtual-Pivoting-Punkt 57 gerichtet sind, sodass Wirklinien dieser Kräfte 58 den Virtual-Pivoting-Punkt 57 durchstoßen.

### Bezugszeichenliste

- 01: Rumpfteil
- 02: Bein
- 03: oberes Beinsegment
- 04: unteres Beinsegment
- 05: -
- 06: Mittelgelenk
- 07: Federdämpfer
- 08: angetriebene Riemenscheibe
- 09: Riemen
- 10: -
- 11: Elektromotor
- 12: Hebelarm
- 13: Hebelarmlagerung
- 14: Antriebshebel
- 15: -
- 16: Spindelantrieb
- 17: Beindrehungsantrieb
- 18: Streckantrieb
- 19: Seilzugantrieb
- 20: -
- 21: Bowdenzug
- 22: Zugseil
- 23: Kurvenscheibensegment
- 24: Fußgelenk
- 25: -
- 26: Fuß
- 27: erster Fußstellantrieb
- 28: erster Fußstellseilzugantrieb
- 29: erster Bowdenzug
- 30: -
- 31: Bowdenzugaufhängung
- 32: zweiter Fußstellantrieb
- 33: zweiter Fußstellseilzugantrieb
- 34: zweiter Bowdenzug
- 35: -
- 36: erster Bodenkontaktpunkt
- 37: zweiter Bodenkontaktpunkt
- 38: dritter Bodenkontaktpunkt
- 39: -
- 40: -
- 41: Zentralkörper
- 42: Kompensatormasse
- 43: erster Kompensatormassenstellantrieb
- 44: zweiter Kompensatormassenstellantrieb
- 45: -
- 46: linker Beinschwenkungsantrieb
- 47: rechter Beinschwenkungsantrieb
- 48: -
- 49: -
- 50: -
- 51: Schwerpunkt
- 52: Rumpfgelenk
- 53: Bein
- 54: Boden
- 55: -
- 56: Feder-Dämpfer-System
- 57: Virtual-Pivoting-Punkt
- 58: Kraft

## Patentansprüche

1. Mobiler Roboter, umfassend eine Beinanordnung mit einem Bein (02) und mit einem Rumpfteil (01), wobei das Bein (02) ein oberes Beinsegment (03) und ein unteres Beinsegment (04) umfasst, welche durch ein Mittelgelenk (06) miteinander verbunden sind, wobei das obere Beinsegment (03) und das untere Beinsegment (04) durch einen Streckantrieb (18) über das Mittelgelenk (04) zueinander streckbar sind, wobei das obere Beinsegment (03) in einem Rumpfgelenk am Rumpfteil (01) gelagert ist und mit einem Beinschwingungsantrieb (08, 09, 11) gegenüber dem Rumpfteil (01) in eine Laufrichtung schwingbar ist, wobei das Rumpfgelenk gegenüber dem Rumpfteil (01) mit einem Beineinzugsantrieb (12, 14, 16) verschiebbar ist, wobei das obere Beinsegment (03) gegenüber dem Rumpfgelenk über eine Feder-Dämpfer-Einheit (07) verkürzbar ist, und wobei das Bein (02) am unteren Beinsegment (04) einen sich in einer Fläche erstreckenden Fuß (26) aufweist; wobei der mobile Roboter mindestens zwei der Beinanordnungen umfasst, und wobei die Beine (02) der Beinanordnungen gemeinsam einen Zentralkörper (01, 41) tragen, welcher die Rumpfteile (01) der Beinanordnungen umfasst.

2. Mobiler Roboter nach Anspruch 1, **dadurch gekennzeichnet, dass** bei den einzelnen Beinanordnungen jeweils das obere Beinsegment (03) mit einem Beindrehungsantrieb (17) um eine Längsachse des oberen Beinsegmentes (03) drehbar ist.

3. Mobiler Roboter nach Anspruch 1 oder 2, **dadurch gekennzeichnet, dass** bei den einzelnen Beinanordnungen jeweils der Fuß (26) gegenüber dem unteren Beinsegment (04) mit einem ersten Fußstellantrieb (27) um eine Fußquerachse drehbar ist.

4. Mobiler Roboter nach einem der Ansprüche 1 bis 3, **dadurch gekennzeichnet, dass** bei den einzelnen Beinanordnungen jeweils der Fuß (26) gegenüber dem unteren Beinsegment (04) mit einem zweiten Fußstellantrieb (32) um eine Fußlängsachse drehbar ist.

5. Mobiler Roboter nach einem der Ansprüche 1 bis 4, **dadurch gekennzeichnet, dass** bei den einzelnen Beinanordnungen jeweils der Streckantrieb (18) eine zwischen dem oberen Beinsegment (03) und dem unteren Beinsegment (04) wirkende Rückstellfeder und einen Seilzug (21) umfasst, wobei ein Zugseil (22) des Seilzuges (21) auf einem Scheibensegment (23) geführt ist, und wobei das Scheibensegment (23) im Mittelgelenk (06) drehfest mit einem der beiden Beinsegmente (04) verbunden ist.

6. Mobiler Roboter nach einem der Ansprüche 1 bis 5, **dadurch gekennzeichnet, dass** bei den einzelnen Beinanordnungen jeweils das obere Beinsegment (03) in Bezug auf das Rumpfgelenk über die Feder-Dämpfer-Einheit (07) durch eine zwischen dem oberen Beinsegment (03) und dem Rumpfgelenk wirkende Kraft verkürzbar ist, wobei das obere Beinsegment (03) in Längsrichtung des oberen Beinsegmentes (03) verkürzbar ist.

7. Mobiler Roboter nach einem der Ansprüche 1 bis 6, **dadurch gekennzeichnet, dass** bei den einzelnen Beinanordnungen jeweils der Beinschwingungsantrieb (08, 09, 11) ein Riemengetriebe (08, 09) mit einer treibenden Riemenscheibe und mit einer getriebenen Riemenscheibe (08) umfasst, wobei die treibende Riemenscheibe mit einem Elektromotor (11) antreibbar ist und die getriebene Riemenschreibe (08) im Rumpfgelenk drehfest mit dem oberen Beinsegment (03) verbunden ist.

8. Mobiler Roboter nach einem der Ansprüche 1 bis 7, **dadurch gekennzeichnet, dass** bei den einzelnen Beinanordnungen jeweils der Fuß (26) mindestens drei zueinander entfernte Bodenkontaktpunkte (36, 37, 38) aufweist, die eine Ebene aufspannen, welche die Fläche der Erstreckung des Fußes (26) bildet.

9. Mobiler Roboter nach einem der Ansprüche 1 bis 8, **dadurch gekennzeichnet, dass** die einzelnen Beinanordnungen jeweils einen Sensor umfassen, mit welchem mindestens eine von drei Komponenten einer Differenz von räumlichen Winkellagen des jeweiligen Fußes (26) messbar ist.

10. Mobiler Roboter nach einem der Ansprüche 1 bis 9, **dadurch gekennzeichnet, dass** bei den einzelnen Beinanordnungen jeweils der Beineinzugsantrieb (12, 14, 16) einen das Rumpfgelenk tragenden Hebelarm (12) umfasst, der mit einem Hebelantrieb (14, 16) gegenüber dem Rumpfteil (01) schwenkbar ist.

11. Mobiler Roboter nach einem der Ansprüche 1 bis 10, **dadurch gekennzeichnet, dass** im Zentralkörper (01, 41) eine Kompensatormasse (42) angeordnet ist, die mit einem ersten Kompensatormassenstellantrieb (43) in die Längsrichtung des Zentralkörpers (01, 41) verschiebbar ist und die mit einem zweiten Kompensatormassenstellantrieb (44) in eine Querachse des Zentralkörpers (01, 41) verschiebbar ist.

12. Mobiler Roboter nach einem der Ansprüche 1 bis 11, **dadurch gekennzeichnet, dass** die Rumpfteile (01) jeweils mit einem Beinschwenkungsantrieb (46; 47) um eine Achse parallel zur Längsachse des Zentralkörpers (01, 41) schwenkbar sind.

13. Mobiler Roboter nach einem der Ansprüche 1 bis 12, **dadurch gekennzeichnet, dass** er genau zwei der Beinanordnungen umfasst.

14. Verfahren zum Ausführen einer Laufbewegung mit einem mobilen Roboter nach einem der Ansprüche 1 bis 13, bei welchem bei den einzelnen Beinanordnungen jeweils der Streckantrieb (18), der Beinschwingungsantrieb (08, 09, 11) und der Beineinzugsantrieb (12, 14, 16) so angesteuert werden, dass eine von einem Boden (54) auf die jeweilige Beinanordnung rückwirkende Kraft (58) grundsätzlich in Richtung eines mit dem Rumpfteil (01) ruhenden Punktes (57) wirkt.

15. Verfahren nach Anspruch 14, **dadurch gekennzeichnet, dass** die beiden Beine (02) abwechselnd belastet werden, wobei in einer Schwungphase des jeweils nicht belasteten Beines (02) der Beineinzugsantrieb (12, 14, 16) des jeweils nicht belasteten Beines (02) so angesteuert wird, dass das Bein (02) in Richtung des jeweiligen Rumpfteiles (01) eingezogen wird, und wobei in der Schwungphase des jeweils nicht belasteten Beines (02) der Streckantrieb (18) des jeweils nicht belasteten Beines (02) so angesteuert wird, dass das Mittelgelenk (06) eingeknickt wird.

## Claims

1. A mobile robot comprising a leg assembly having a leg (02) and having a torso portion (01), the leg (02) comprising an upper leg segment (03) and a lower leg segment (04) connected to each other by a center joint (06), the upper leg segment (03) and the lower leg segment (04) being extendable toward each other by an extension drive (18) via the center joint (04), wherein the upper leg segment (03) is mounted in a torso joint on the torso portion (01) and can be swung in a running direction relative to the torso portion (01) by means of a leg swing drive (08, 09, 11), wherein the torso joint can be displaced relative to the torso portion (01) by means of a leg retraction drive (12, 14, 16), wherein the upper leg segment (03) can be shortened relative to the torso joint by means of a spring-damper unit (07), and wherein the leg (02) has a foot (26) extending in a plane on the lower leg segment (04); wherein the mobile robot comprises at least two of the leg assemblies, and wherein the legs (02) of the leg assemblies jointly support a central body (01, 41) comprising the torso portions (01) of the leg assemblies.

2. A mobile robot according to claim 1, **characterized in that** in each of the individual leg assemblies, the upper leg segment (03) is rotatable about a longitudinal axis of the upper leg segment (03) by a leg rotation drive (17).

3. A mobile robot according to claim 1 or 2, **characterized in that** in the individual leg assemblies, the foot (26) is in each case rotatable about a transverse foot axis relative to the lower leg segment (04) with a first foot actuator (27) .

4. Mobile robot according to one of the claims 1 to 3, **characterized in that** in the individual leg assemblies, the foot (26) is in each case rotatable about a longitudinal foot axis relative to the lower leg segment (04) with a second foot actuator (32).

5. Mobile robot according to one of the claims 1 to 4, **characterized in that**, in the individual leg assemblies, the extension drive (18) in each case comprises a return spring acting between the upper leg segment (03) and the lower leg segment (04) and a cable pull (21), a traction cable (22) of the cable pull (21) being guided on a pulley segment (23), and the pulley segment (23) being connected in a rotationally fixed manner to one of the two leg segments (04) in the central joint (06).

6. Mobile robot according to one of the claims 1 to 5, **characterized in that**, in the individual leg assemblies, the upper leg segment (03) can in each case be shortened with respect to the torso joint via the spring-damper unit (07) by a force acting between the upper leg segment (03) and the torso joint, the upper leg segment (03) being shortenable in the longitudinal direction of the upper leg segment (03).

7. Mobile robot according to any one of the claims 1 to 6, **characterized in that**, in the individual leg assemblies, the leg swing drive (08, 09, 11) in each case comprises a belt drive (08, 09) with a driving pulley and with a driven pulley (08), it being possible for the driving pulley to be driven by an electric motor (11), and the driven pulley (08) being connected in a rotationally fixed manner to the upper leg segment (03) in the torso joint.

8. Mobile robot according to any one of the claims 1 to 7, **characterized in that**, in each of the individual leg assemblies, the foot (26) has at least three ground contact points (36, 37, 38) spaced apart from each other and spanning a plane that forms the area of extension of the foot (26).

9. Mobile robot according to any one of the claims 1 to 8, **characterized in that** the individual leg assemblies each comprise a sensor with which at least one of three components of a difference of spatial angular positions of the respective foot (26) is measurable.

10. Mobile robot according to any one of the claims 1 to 9, **characterized in that** in each of the individual leg assemblies the leg retraction drive (12, 14, 16) comprises, in each case, a lever arm (12) carrying the torso joint and which can be pivoted relative to the torso part (01) by means of a lever drive (14, 16).

11. Mobile robot according to any one of the claims 1 to 10, **characterized in that** a compensator mass (42) is arranged in the central body (01, 41), which mass can be displaced in the longitudinal direction of the central body (01, 41) by means of a first compensator mass actuator (43) and can be displaced in a transverse axis of the central body (01, 41) by means of a second compensator mass actuator (44).

12. Mobile robot according to any one of the claims 1 to 11, **characterized in that** the torso parts (01) are each pivotable by a leg pivoting drive (46, 47) about an axis parallel to the longitudinal axis of the central body (01, 41) .

13. Mobile robot according to any one of the claims 1 to 12, **characterized in that** it comprises exactly two leg assemblies.

14. A method of performing a walking motion with a mobile robot according to any one of claims 1 to 13, in which, for the individual leg arrangements, the extension drive (18), the leg swing drive (08, 09, 11) and the leg retraction drive (12, 14, 16) are each controlled in such a way that a force (58) acting back from a ground (54) on the respective leg arrangement basically acts in the direction of a point (57) at rest with the torso part (01).

15. Method according to claim 14, **characterized in that** the two legs (02) are alternately loaded, wherein in a swing phase of the respectively non-loaded leg (02) the leg retraction drive (12, 14, 16) of the respectively non-loaded leg (02) is controlled in such a way that the leg (02) is retracted in the direction of the respective torso part (01), and wherein in the swing phase of the respectively non-loaded leg (02) the leg retraction drive (12, 14, 16) is controlled in such a way that the central joint (06) is buckled.

## Revendications

1. Robot mobile, comprenant un système de jambes avec une jambe (02) et avec une partie de tronc (01), sachant que la jambe (02) comprend un segment de jambe supérieur (03) et un segment de jambe inférieur (04), lesquels sont reliés entre eux par une articulation centrale (06), sachant que le segment de jambe supérieur (03) et le segment de jambe inférieur (04) peuvent être étendus l'un par rapport à l'autre par un mécanisme d'extension (18) par le biais de l'articulation centrale (06), sachant que le segment de jambe supérieur (03) est logé dans une articulation de tronc sur la partie de tronc (01) et peut être balancée dans une direction de marche avec un mécanisme d'oscillation de jambe (08, 09, 11) par rapport à la partie de tronc (01), sachant que l'articulation de tronc peut être déplacée par rapport à la partie de tronc (01) avec un mécanisme de rentrée de jambe (12, 14, 16), sachant que le segment de jambe supérieur (03) peut être raccourci par rapport à l'articulation de tronc par le biais d'une unité d'amortissement à ressorts (07) et sachant que la jambe (02) comporte sur le segment de jambe inférieur (04) un pied (26) s'étendant dans une surface, sachant que le robot mobile comprend au moins deux systèmes de jambe et sachant que les jambes (02) des systèmes de jambe portent ensemble un corps central (01, 41), lequel comprend les parties de tronc (01) des systèmes de jambe.

2. Robot mobile selon la revendication 1, **caractérisé en ce que** concernant les systèmes de jambe individuels, le segment de jambe supérieur (03) peut être respectivement tourné avec un mécanisme de rotation de jambe (17) autour d'un axe longitudinal du segment de jambe supérieur (03).

3. Robot mobile selon la revendication 1 ou 2, **caractérisé en ce que** concernant les systèmes de jambe individuels, le pied (26) peut être respectivement tourné par rapport au segment de jambe inférieur (04) autour d'un axe transversal de pied avec un premier mécanisme de commande de pied (27).

4. Robot mobile selon l'une quelconque des revendications 1 à 3, **caractérisé en ce que** concernant les systèmes de jambe individuels, le pied (26) peut être respectivement tourné par rapport au segment de jambe inférieur (04) avec un deuxième mécanisme de commande de pied (32) autour d'un axe longitudinal de pied.

5. Robot mobile selon l'une quelconque des revendications 1 à 4, **caractérisé en ce que** concernant les systèmes de jambe individuels, le mécanisme d'extension (18) comprend respectivement un ressort de rappel agissant entre le segment de jambe supérieur (03) et le segment de jambe inférieur (04) et une commande par câble (21), sachant qu'un câble de traction (22) de la commande par câble (21) est guidé sur un segment de poulie (23) et sachant que le segment de poulie (23) est relié solidaire en rotation dans l'articulation centrale (06) à un des deux segments de jambe (04).

6. Robot mobile selon l'une quelconque des revendications 1 à 5, **caractérisé en ce que** concernant les systèmes de jambes individuels, le segment de jambe supérieur (03) peut être respectivement raccourci eu égard à l'articulation de tronc par le biais de l'unité d'amortissement à ressorts (07) par une force agissant entre le segment de jambe supérieur (03) et l'articulation de tronc, sachant que le segment de jambe supérieur (03) peut être raccourci dans la direction longitudinale du segment de jambe supérieur (03) .

7. Robot mobile selon l'une quelconque des revendications 1 à 6, **caractérisé en ce que** concernant les systèmes de jambe individuels, le mécanisme d'oscillation de jambe (08, 09, 11) comprend respectivement une transmission à courroie (08, 09) avec une poulie menante et avec une poulie entraînée (08), sachant que la poulie menante peut être entraînée avec un moteur électrique (11) et la poulie menée (08) est reliée solidaire en rotation dans l'articulation de tronc au segment de jambe supérieur (03).

8. Robot mobile selon l'une quelconque des revendications 1 à 7, **caractérisé en ce que** concernant les systèmes de jambe individuels, le pied (26) comporte respectivement au moins trois points de contact au sol (36, 37, 38) éloignés l'un de l'autre, qui couvrent un plan, lequel forme la surface d'extension du pied (26) .

9. Robot mobile selon l'une quelconque des revendications 1 à 8, **caractérisé en ce que** les systèmes de jambe individuels comprennent respectivement un capteur avec lequel peut être mesurée au moins une des trois composantes d'une différence des positions angulaires spatiales du pied respectif (26).

10. Robot mobile selon l'une quelconque des revendications 1 à 9, **caractérisé en ce que** concernant les systèmes de jambe individuels, le mécanisme de rentrée de jambe (12, 14, 16) comprend respectivement un bras de levier (12) supportant l'articulation de tronc, qui peut être pivoté avec un mécanisme de levier (14, 16) par rapport à la partie de tronc (01).

11. Robot mobile selon l'une quelconque des revendications 1 à 10, **caractérisé en ce que** dans le corps central (01, 41) est disposée une masse compensatrice (42), qui peut être déplacée avec un premier mécanisme de commande de masse compensatrice (43) dans la direction longitudinale du corps central (01, 41) et qui peut être déplacée avec un deuxième mécanisme de commande de masse compensatrice (44) dans un axe transversal du corps central (01, 41).

12. Robot mobile selon l'une quelconque des revendications 1 à 11, **caractérisé en ce que** les parties de tronc (01) peuvent respectivement pivoter avec un mécanisme de pivotement de jambe (46 ; 47) autour d'un axe parallèlement à l'axe longitudinal du corps central (01, 41).

13. Robot mobile selon l'une quelconque des revendications 1 à 12, **caractérisé en ce qu'**il comprend exactement deux des systèmes de jambes.

14. Procédé destiné à l'exécution d'un mouvement de marche avec un robot mobile selon l'une quelconque des revendications 1 à 13, pour lequel concernant les systèmes de jambe individuels, le mécanisme d'extension (18), le mécanisme d'oscillation de jambe (08, 09, 11) et le mécanisme de rentrée de jambe (12, 14, 16) sont respectivement activés de telle manière qu'une force (58) réagissant par un sol (54) sur le système de jambe respectif agit en principe en direction d'un point (57) fixe avec la partie de tronc (01) .

15. Procédé selon la revendication 14, **caractérisé en ce que** les deux jambes (02) sont sollicitées alternativement, sachant que dans une phase d'élan de la jambe respectivement non sollicitée (02), le mécanisme de rentrée de jambe (12, 14, 16) de la jambe respectivement non sollicitée (02) est activé de telle manière que la jambe (02) est rentrée en direction de la partie de tronc respective (01) et sachant que dans la phase d'élan de la jambe respectivement non sollicitée (02), le mécanisme d'extension (18) de la jambe respectivement non sollicitée (02) est activé de telle manière que l'articulation centrale (06) est pliée.
